# DEMANDE DE BREVET EUROPEEN

(11) **EP 3 514 664 A1**
(43) Date de publication de la demande: **24.07.2019**
(21) Numéro de dépôt: 18212997.3
(22) Date de dépôt: 09.05.2006
(51) Int. Cl.: G06F 3/023, G06F 1/16, G06F 3/0488

(54) **CLAVIER UNIVERSEL A ECRAN TACTILE**

(30) Priorité: 11.10.2005 FR 0510346
(62) Demande divisionnaire de: 06743774.9
(71) Demandeur: Ennadi, Abderrahim, Houston, TX 77077 (US)
(72) Inventeur: Ennadi, Abderrahim, 02430 Gauchy (FR)
(74) Mandataire: AWA Denmark A/S

(57) **Abrégé**

L'invention porte sur un clavier à écran tactile comprenant un écran à dalle tactile (1), lumineux, à affichage en couleurs, et apte à afficher un clavier basique standard ainsi que des touches d'accès rapide à des fonctionnalités pouvant être affichées sur ledit écran à dalle tactile par des interfaces respectives.

## Description

La présente invention concerne un clavier d'ordinateur (portable ou de bureau) à écran tactile multifonctions permettant d'utiliser son ordinateur de façon habituelle, agréable et hygiénique.

Le clavier mécanique standard actuel utilisé couramment dans tous les domaines industriels ou particuliers nécessitant un ordinateur, est un clavier classique à touches bruyantes malgré de nombreuses améliorations ergonomiques.

L'interstice entre les touches est un véritable repère pour les germes et microbes de toutes sortes, qu'il est très difficile de déloger. Ceci pose un grave problème dans tous les milieux aseptisés (salle blanche, milieux hospitaliers, ...) où l'utilisation d'ordinateurs est bien souvent interdite ou réduite au minimum, ainsi que dans les lieux ouverts au public où les ordinateurs sont utilisés par plusieurs personnes (cyber-centre, bornes accès-libres...).

Le clavier mécanique standard actuel est entièrement paramétré et configuré en usine, et définit la place de chaque touche ou fonction sans aucune possibilité de modification. Ainsi un clavier AZERTY ne peut être converti en clavier QWERTY, il faut changer complètement de clavier. Il en est de même si l'on souhaite travailler avec d'autres langues que les langues latines. A chaque langue à caractères spéciaux (russe, arabe, chinois,...) correspond son clavier, d'où autant de claviers à posséder pour celui qui travaille en plusieurs langues.

Le clavier mécanique standard actuel est très limité aux niveaux des fonctionnalités. Lorsqu'on a voulu ajouter une nouvelle fonction comme l'accès direct à Internet par exemple, il a fallu ajouter une nouvelle touche. Ces ajouts de touches seront limités, à plus ou moyen terme, par la taille du clavier en lui-même.

Le clavier mécanique standard utilisé aujourd'hui pose un autre problème : il est impossible de l'utiliser dans une pièce sombre non éclairée, car les touches deviennent illisibles.

Le clavier mécanique usuel standard actuel n'a qu'une seule et unique fonction : nous permettre de taper des chiffres, des lettres et des symboles sur notre ordinateur.

Le clavier suivant l'invention permet de remédier à l'ensemble des inconvénients précédemment énumérés, et ajoute même de nouvelles fonctionnalités. Il comporte en effet, selon une première caractéristique, un écran à dalle tactile, léger et résistant, lumineux, en couleurs, de bonne résolution, sur lequel s'affiche le clavier basique standard, sans pavé numérique, ainsi que les touches de raccourci vers les autres fonctionnalités (souris, pavé numérique, calculatrice, tablette graphique, accès direct à certains logiciels, ...). Cette liste de fonctionnalité est non exhaustive, et peut être augmentée en fonctions des nouvelles techniques et accessoires à venir dans le futur, dans ce domaine.

En d'autres termes, il est proposé selon un aspect de l'invention, un clavier à écran tactile comprenant un écran à dalle tactile, lumineux, à affichage en couleurs, et apte à afficher un clavier basique standard ainsi que des touches d'accès rapide à des fonctionnalités pouvant être affichées sur ledit écran à dalle tactile par des interfaces respectives.

Avantageusement, les fonctionnalités comprennent une fonction souris, et/ou une fonction pavé numérique, et/ou une fonction calculatrice, et/ou une fonction tablette graphique, et/ou un logiciel embarqué dans l'ordinateur auquel est dédié le clavier, et/ou une fonction téléphone.

Bien entendu, toute autre fonctionnalité peut être envisagée de manière non limitative.

L'absence de relief dû à l'absence de touches mécaniques le rend silencieux lors de son utilisation, mais il peut également être paramétré de façon sonore sur chaque touche (« bip touche » plus ou moins sonore, ou mélodie).

En d'autres termes, une touche est adaptée pour être paramétrée sonore ou silencieuse lors de son utilisation.

Cette absence de relief, ainsi que les matériaux utilisés, font de ce clavier un clavier hygiénique. Les nids à microbes n'existent plus, et le nettoyage est amplement facilité : une simple lingette suffit.

L'écran utilisé dans ce clavier étant un écran lumineux de bonne résolution, l'utilisateur peut l'utiliser dans toutes les pièces où la lumière est faible, et où il est normalement impossible d'utiliser un ordinateur sans source lumineuse extérieure.

Ce clavier à écran tactile comporte en plus de la fonction clavier usuel classique, d'autres fonctions que n'ont pas les claviers mécaniques classiques (fonction tablette graphique, souris, téléphone, ...), entièrement paramétrables à volonté en fonction des besoins spécifiques de l'utilisateur.

Aussi, selon un mode de réalisation, lesdites interfaces sont entièrement paramétrables par l'utilisateur en fonction de ses besoins.

Avantageusement, le clavier à écran tactile est apte à afficher un clavier AZERTY, QWERTY, latin, cyrillique, ou un autre clavier à caractères spéciaux, et comprend des moyens pour passer d'un clavier à un autre, sans éteindre l'ordinateur auquel est connecté ledit clavier.

Ainsi, il est aisé de travailler en plusieurs langues différentes sur un même document.

Selon un mode de réalisation, le clavier à écran tactile comprend une touche sécurité permettant à l'utilisateur de verrouiller son clavier pour le nettoyer.

Avantageusement, le clavier à écran tactile comprend une zone de lecture et de reconnaissance d'empreinte digitale.

Selon des modes particuliers de réalisation :
- le clavier à écran tactile peut être intégré directement sur un ordinateur portable, auquel cas, c'est la batterie de l'ordinateur qui l'alimentera pour son bon fonctionnement.
- le clavier à écran tactile ressemble, dans sa forme globale uniquement, à un clavier mécanique usuel, et est connecté à l'ordinateur de bureau via un câble qui permet, non seulement le transfert de données, mais également son alimentation.
- le clavier à écran tactile ressemble , dans sa forme globale uniquement, à un clavier mécanique usuel, et est connecté à l'ordinateur de bureau par le biais d'une connexion à distance Bluetooth ou infra rouge, auquel cas une petite batterie, qui se charge via une alimentation secteur, l'alimente.
- le clavier à écran tactile comporte un ou plusieurs ports USB, firewall, ... permettant la connexion des disques amovibles, appareils photos, ... directement sur le clavier.

Les dessins annexés illustrent l'invention, à titre non limitatif :

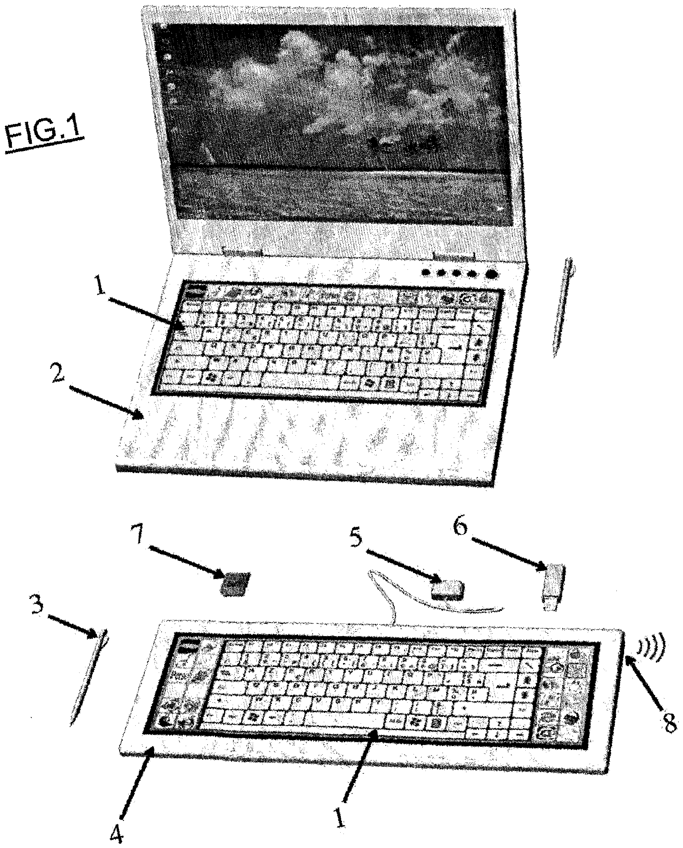

La figure 1 représente, en vue générale, le clavier à écran tactile dans ses deux versions : intégré dans un portable et en version standard, avec ses accessoires.

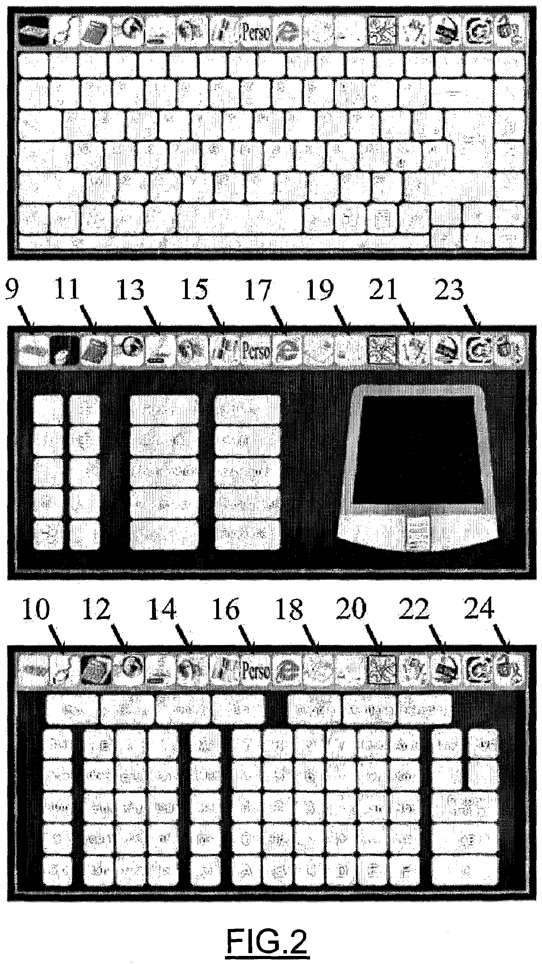

La figure 2 représente, en vue de face, à titre non limitatif, certaines des interfaces du clavier à écran tactile : clavier, souris, et calculatrice, mais d'autres interfaces sont, et pourront être, réalisées.

En référence à ces dessins, le clavier à écran tactile, dans sa version intégrable est composé d'une écran tactile 1 monté directement en usine, sur un ordinateur portable 2, en lieu et place du clavier mécanique standard.

Le clavier à écran tactile standard est composé d'un écran tactile 1 logé dans un support clavier standard 4 en remplacement des touches mécaniques actuellement utilisées. Le support clavier 4 peut intégrer des ports USB pour permettre le branchement direct, sur le clavier, de clé USB 6 ou de souris..., des lecteurs de cartes SD 7 une ou plusieurs entrées/sorties sons, un micro intégré, ainsi qu'un logement pour le stylet 3 principalement utilisé avec la tablette graphique. D'autres accessoires peuvent être envisagés en fonctions des besoins du marché et des avancées technologiques à venir.

Le clavier à écran tactile standard 1, 4 est relié à l'unité centrale par le biais d'un branchement ou connecteur 5 spécifique, qui sert aussi bien d'alimentation que de transfert de données. Ce connecteur 5 peut être, soit monté directement sur la carte mère de l'ordinateur, soit sur un carte spéciale montée sur un port PCI ou tout autre nouveau port spécialement conçu en ce sens sur la carte mère, soit directement sur la carte graphique de l'ordinateur, modifiée en ce sens. Ce clavier à écran tactile peut également être connecté à l'unité centrale via une connexion à distance bluetooth, WIFI, ... 8 auquel cas il sera alimenté séparément directement sur secteur ou sur batterie rechargeable.

Les interfaces du clavier à écran tactile peuvent être pilotées par un logiciel conçu en parallèle du clavier, et peuvent être multiples et variées, adaptables aux besoins de chacun.

A titre non limitatif, l'interface clavier, interface principale du clavier à écran tactile, inclut des touches de raccourcis pour accès direct aux autres interfaces. Lorsque l'interface est active, la touche correspondante change de couleur, indiquant ainsi à l'utilisateur l'interface en cours d'utilisation.

On peut ainsi dénombrer, entre autres, la touche clavier 9 activant l'interface principale clavier, la touche souris 10 activant l'interface souris avec ses fonctions « copier », « coller », « couper », « ouvrir », « rechercher », ... fonctions identiques à celles d'une souris classique 3 boutons normale.

La touche 11 permet d'accéder à la fonction calculatrice, qui peut être paramétrée en calculatrice standard basique ou scientifique selon les besoins de l'utilisateur.

Certaines touches de raccourcis sont laissées libres afin de permettre à l'utilisateur de les paramétrer en fonctions de ses besoins. Ainsi, elles peuvent être transformées en touches d'accès direct à certaines applications, telles que « Photoshop (marque déposée) » 12, « Quark (marque déposée) » 13, « Illustrator (marque déposée) » 14, affichant alors tous les outils utilisés dans cette application, voire même à l'ensemble des applications « Microsoft (marque déposée) » présentes sur l'ordinateur 15, mais peuvent être dédiées à d'autres applications en fonctions de besoins de chacun.

La touche PERSO 16 présente sur le clavier peut être personnalisée également et peut alors afficher le clavier personnalisé de l'utilisateur (changement de place de lettres, ordre alphabétique, caractères spéciaux...).

D'autres touches permettent l'accès direct à certaines fonctionnalités usuelles de l'ordinateur. Ainsi, on trouve une touche Explorer 17, pour accéder directement à internet, et une touche téléphone 18, qui associée à un casque téléphonique affiche l'interface d'un téléphone que l'on peut utiliser comme un téléphone standard classique, mais qui offre également la possibilité de se connecter à une borne d'installation téléphonique d'entreprise.

La touche Tablette Graphique 19, complément indispensable de nombreux logiciels de graphisme et de 2D, permet également une reconnaissance des caractères manuscrits pour l'écriture rapide, voire même l'insertion de la signature manuscrite au bas de documents transmis par email.

La touche Paramétrage et Outils 20 autorise l'utilisateur à configurer tous les paramètres de son clavier directement sur le clavier sans passer par l'ordinateur. Cette configuration est néanmoins accessible depuis le logiciel sur l'ordinateur.

La touche Langues 21 apporte une fonctionnalité nouvelle, puisque l'on peut basculer directement d'un clavier latin, à un clavier chinois, puis à un clavier russe, ... sans avoir à éteindre son ordinateur et brancher un nouveau clavier.

La touche Multimédia 22 donne un accès direct au réglage des égaliseurs de son, de vidéos, et pourquoi pas à un petit piano virtuel, voire même une table de mixage vidéo/son, à utiliser avec les logiciels appropriés.

La touche email 23 permettra à l'utilisateur, après l'avoir paramétrée, d'accéder directement à sa messagerie email par « outlook » (marque déposée) ou par d'autres logiciels de messagerie.

La touche Sécurité 24 permet à l'utilisateur de verrouiller son clavier pour le nettoyer. Toutefois avec l'inclusion d'une zone de lecture d'empreinte digitale, on permet l'identification de l'utilisateur et ainsi la sécurisation de l'ordinateur au maximum. De même, un logiciel de reconnaissance d'empreintes peut être inclut dans le logiciel de configuration accompagnant le clavier à écran tactile, afin de sécuriser les dossiers sur le disque dur.

D'autres touches et fonctionnalités peuvent encore être intégrées à l'avenir sur ce clavier, sans aucune limites, et ce, en fonction des besoins et des avancées technologiques en la matière.

A titre d'exemple non limitatif, le clavier à écran tactile intégrable aura des dimensions de l'ordre de 30 cm pour la longueur et 15 cm pour la largeur, et le clavier à écran tactile standard aura des dimensions de l'ordre de 40 cm pour la longueur et 14 cm pour la largeur. Ces dimensions peuvent toutefois être adaptées à chaque configuration matérielle présente sur le marché et sur laquelle il doit être installé, ainsi qu'aux besoins spécifiques des clients.

Le clavier à écran tactile suivant l'invention comble le fossé entre l'informatique traditionnel (univers machine) et les méthodes de travail naturelles (univers humain), puisqu'il intègre de nombreuses fonctionnalités, permettant à l'utilisateur d'utiliser son ordinateur aussi facilement qu'une feuille de papier. L'utilisateur peut en effet, prendre ses notes à la main, directement sur son ordinateur avec retranscription automatique, signer ses documents email pour les approuver, et réaliser bien d'autres choses avec une facilité déconcertante.

Le clavier à écran tactile suivant l'invention, de par les multiples fonctions qu'il offre, permet un travail plus aisé et plus rapide à l'utilisateur de portable qui n'a plus besoin de transporter souris, tablette graphique, pavé numérique..., son ordinateur réunissant maintenant toutes ses fonctions en une seule machine.

Le clavier à écran tactile suivant l'invention, de par sa possibilité de paramétrage complet en fonction des besoins de chacun, s'adresse à toutes les personnes utilisant couramment un ordinateur, aussi bien au niveau personnel que professionnel.

### Modes de réalisation énumérés

1. Clavier à écran tactile caractérisé en ce qu'il comprend un écran à dalle tactile (1), lumineux, à affichage en couleurs, et apte à afficher un clavier basique standard ainsi que des touches d'accès rapide à des fonctionnalités pouvant être affichées sur ledit écran à dalle tactile par des interfaces respectives.
2. Clavier à écran tactile selon le mode de réalisation 1, dans lequel lesdites fonctionnalités comprennent une fonction souris, et/ou une fonction pavé numérique, et/ou une fonction calculatrice, et/ou une fonction tablette graphique, et/ou un logiciel embarqué dans l'ordinateur auquel est dédié le clavier, et/ou une fonction téléphone.
3. Clavier à écran tactile selon le mode de réalisation 1 ou 2 dans lequel une touche est adaptée pour être paramétrée sonore ou silencieuse lors de son utilisation.
4. Clavier à écran tactile selon l'un des modes de réalisation précédents, dans lequel lesdites interfaces, sont paramétrables par l'utilisateur en fonction de ses besoins
5. Clavier à écran tactile selon l'un des modes de réalisation précédents, apte à afficher un clavier AZERTY, QWERTY, latin, cyrillique, ou un autre clavier à caractères spéciaux, et comprenant des moyens pour passer d'un clavier à un autre, sans éteindre l'ordinateur auquel est connecté ledit clavier.
6. Clavier à écran tactile selon l'un des modes de réalisation précédents comprenant une touche sécurité permettant à l'utilisateur de verrouiller son clavier pour le nettoyer.
7. Clavier à écran tactile selon le mode de réalisation 6, comprenant, en outre, une zone de lecture et de reconnaissance d'emprunte digitale.
8. Clavier à écran tactile selon l'un des modes de réalisation précédents adapté pour être intégré directement à un ordinateur portable (2), ou directement à un support clavier classique (4).
9. Clavier à écran tactile selon le mode de réalisation 8, adapté pour être alimenté directement via la batterie du portable ou via l'alimentation de l'ordinateur, ou séparément sur secteur ou batterie rechargeable.
10. Clavier à écran tactile selon le mode de réalisation 9 dans lequel la connexion à l'ordinateur auquel il est connecté est réalisée par le biais d'un branchement (5) spécifique, qui sert aussi bien d'alimentation que de transfert de données monté, soit directement sur la carte mère de l'ordinateur, soit sur un carte spéciale montée sur un port PCI (par exemple) ou autre port conçu dans ce but, soit directement sur la carte graphique de l'ordinateur, modifiée en ce sens.
11. Clavier à écran tactile selon le mode de réalisation 9 dans lequel la connexion à l'ordinateur auquel il est connecté est une connexion à distance et dans lequel ledit clavier est alimenté directement sur secteur ou sur batterie rechargeable.
12. Clavier à écran tactile standard (1, 4) selon l'un des modes de réalisation précédents comprenant un ou plusieurs ports USB, irewall, in ra rouge, connexions wi i (8), des lecteurs de cartes SD (7), une ou plusieurs entrées/sorties sons, un micro et haut-parleur intégrés, ainsi qu'un logement pour le stylet (3) permettant la co lnexion des disques amovibles, appareils photos, directement sur le clavier.

## Revendications

1. Ordinateur portable comportant un écran de visualisation et une unité centrale comprenant un disque dur, une batterie, une carte graphique, et une carte mère logés dans un support de clavier standard, ledit ordinateur comprenant, en outre, un clavier composé d'un écran tactile multifonctions monté sur l'ordinateur et logé dans ledit support de clavier standard en lieu et place d'un clavier mécanique standard, où le support de clavier comporte au moins un port de connexion qui permet le branchement direct d'au moins un accessoire,
le clavier est adapté pour l'affichage de plusieurs interfaces paramétrables,
lesdites interfaces comprenant au moins une interface principale clavier, incluant des touches de raccourcis pour l'accès direct aux autres interfaces,
une partie desdites touches de raccourcis étant laissée libres afin de permettre à l'utilisateur de les paramétrer en fonction de ses besoins,
le clavier étant relié à l'unité centrale de l'ordinateur par le biais d'un connecteur spécifique monté directement sur la carte graphique ou la carte mère de l'ordinateur, qui sert aussi bien d'alimentation que de transfert de données.

2. Ordinateur selon la revendication 1, dans lequel lorsqu'une interface est active, la touche de raccourci correspondante à cette interface active change de couleur indiquant à l'utilisateur l'interface en cours d'utilisation.

3. Ordinateur selon la revendication 1 ou 2, comprenant une touche sécurité permettant à l'utilisateur de verrouiller son clavier pour le nettoyer, et où ladite touche sécurité comprend, en outre, une zone de lecture et de reconnaissance d'empreinte digitale permettant l'identification de l'utilisateur.

4. Ordinateur selon l'une quelconque des revendications précédentes où le clavier est apte à afficher aux choix des claviers AZERTY, QWERTY, latin, cyrillique, et autres caractères spéciaux, et comprend des moyens pour passer d'un clavier à un autre, sans éteindre l'ordinateur.

5. Ordinateur selon l'une quelconque des revendications précédentes dans lequel les touches clavier peuvent être paramétrées sonores ou silencieuses lors de leur fonctionnement.

6. Ordinateur selon l'une quelconque des revendications précédentes où la configuration de tous les paramètres du clavier est accessible par l'intermédiaire du logiciel de l'ordinateur.

7. Ordinateur selon l'une quelconque des revendications précédentes où le clavier à écran tactile est alimenté par la batterie de l'ordinateur portable.

8. Ordinateur selon l'une quelconque des revendications précédentes dans lequel les interfaces pouvant être affichées comprennent :
- une interface souris,
- une interface téléphone,
- une interface email,
- une tablette graphique,
- lesdites touches de raccourcis pour activer d'autres interfaces comprenant :
- une touche de raccourci souris pour activer l'interface souris,
- une touche de raccourci téléphone pour afficher l'interface téléphone,
- une touche de raccourci pour activer l'interface email,
- une touche tablette graphique pour afficher la tablette graphique,
- une touche Langues pour basculer directement d'un clavier à un autre.

9. Ordinateur selon l'une quelconque des revendications précédentes, dans lequel l'interface principale comprend une touche PERSO qui affiche un clavier personnalisé de l'utilisateur.

10. Ordinateur selon l'une quelconque des revendications précédentes, dans lequel l'interface principale comprend une touche Multimédia qui donne accès direct au réglage des égalisateurs de son, de vidéos, à un piano virtuel, et à une table de mixage vidéo/son.

11. Ordinateur selon l'une quelconque des revendications précédentes, dans lequel les matériaux utilisés pour le clavier à écran tactile font du clavier un clavier hygiénique.

12. Ordinateur selon l'une quelconque des revendications précédentes, dans lequel l'écran de visualisation est monté sur pivot par rapport au support de clavier standard.

13. Ordinateur selon l'une quelconque des revendications précédentes, dans lequel ledit au moins un port de connexion du support de clavier comprend des ports USB pour permettre le branchement direct d'une clé USB 6, d'une souris, ou d'un lecteur de cartes SD 7.

14. Ordinateur selon l'une quelconque des revendications précédentes, dans lequel ledit support de clavier comprend, en outre, une ou plusieurs entrées/sorties sons, un micro intégré, ainsi qu'un logement pour un stylet principalement utilisé avec la tablette graphique.
